# EUROPÄISCHE PATENTSCHRIFT

(11) **EP 3 044 100 B1**
(45) Veröffentlichungstag und Bekanntmachung des Hinweises auf die Patenterteilung: **02.08.2017**
(21) Anmeldenummer: 14752877.2
(22) Anmeldetag: 20.08.2014
(51) Int. Cl.: B65B 35/10, B65G 21/20, B65B 59/00, B65B 59/04, F16B 2/24

(54) **FORMATTEIL SOWIE FORMATTEILBEFESTIGUNG**
FORMAT PART AND FORMAT PART FASTENER
PIÈCE DE FORMAT ET FIXATIONS POUR PIÈCES DE FORMAT

(30) Priorität: 12.09.2013 DE 102013110048
(43) Veröffentlichungstag der Anmeldung: 20.07.2016
(73) Patentinhaber: KHS GmbH, 44143 Dortmund (DE)
(72) Erfinder: KRULITSCH, Dieter-Rudolf, 55545 Bad Kreuznach (DE); JOX, Michael, 55411 Bingen (DE)
(86) Internationale Anmeldenummer: PCT/EP2014/067710
(87) Internationale Veröffentlichungsnummer: WO 2015/036209

(56) Entgegenhaltungen:
- EP-A1- 2 583 916
- DE-A1-102006 023 317
- DE-A1-102009 018 731
- GB-A- 1 516 309

## Beschreibung

Die Erfindung bezieht sich auf Formatteile gemäß Oberbegriff Patentanspruch 1 sowie auf eine Befestigung für Formatteile bzw. auf eine Formatteilbefestigung gemäß Oberbegriff Patentanspruch 8.

Insbesondere bei Behälterbehandlungsmaschinen, aber auch bei Behältertransportstrecken sind in der Regel zahlreiche formatabhängige, d.h. von der Art und/oder der Größe und/oder dem Durchmesser von Behältern abhängige Formatteile in Form von Behälterführungselementen notwendig, die bei einem Behälterwechsel, d.h. bei der Umstellung von einem Behältertyp auf einen anderen Behältertyp ausgetauscht werden müssen, damit auch die Behälter des anderen Behältertyps zuverlässig behandelt und/oder transportiert werden können. Bisher ist der Austausch solcher Formatteile sehr zeitaufwendig und wegen der damit verbundenen Produktionsausfallzeiten kostenintensiv, was als äußerst nachteilig empfunden wird. Ebenfalls bekannt wurde eine Vorrichtung nach der DE 10 2009 018 731 A1. Die durch diese Schrift vorgestellte Vorrichtung ermöglicht den schnellen und einfachen Austausch von Formatteilen. Dazu ist mehr im Detail vorgesehen, dass am Formatteil eine hohle Hülse vorgesehen ist, die an ihrem Umfang eine seitliche Ausnehmung aufweist. Weiterhin ist an dieser Hülse ein schwenkbares, riegelartiges Element angebracht, welches in die seitliche Ausnehmung geschwenkt werden kann. Dabei ist es wesentlich, dass das riegelartige Element so weit in die seitliche Ausnehmung geschwenkt werden kann, dass das Element bis in den, in der Hülse befindlichen Hohlraum ragt. Das Gegenstück zu dieser Hülse bildet ein auf einem Maschinentisch angeordneter Bolzen, welcher an seinem, vom Maschinentisch weg weisenden Ende eine Umfangsnut aufweist. Der Außendurchmesser des Bolzens und der Innendurchmesser der Hülse sind auf einander abgestimmt. Zur Montage des Formatteils wird die Hülse so weit auf den Bolzen aufgeschoben, bis das riegelartige Element in die Umfangsnut des Bolzens eingeschwenkt werden kann, wodurch das Formatteil auf dem Bolzen und somit auf dem Maschinentisch fixiert ist. Nachteilig an dieser Lösung ist, dass diese Art der Befestigung stets ein gewisses Spiel aufweist. Aufgabe der Erfindung ist es, Formatteile aufzuzeigen, die einen schnellen Austausch bei exakter Positionierung ermöglichen. Zur Lösung dieser Aufgabe ist ein Formatteil entsprechend dem Patentanspruch 1 ausgebildet. Eine Formatteilbefestigung ist Gegenstand des Patentanspruchs 8.

"Formatteile" sind im Sinne der Erfindung Führungen und Führungselemente für Behälter insbesondere bei Behälterbehandlungsmaschinen oder Behältertransporteuren.

Der Ausdruck "im Wesentlichen" bzw. "etwa" bzw. "ca." bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Weiterbildungen der Erfindung sind Gegenstand der Unteransprüche.

Die Erfindung wird im Folgenden anhand der Figuren an Ausführungsbeispielen näher erläutert. Es zeigen:

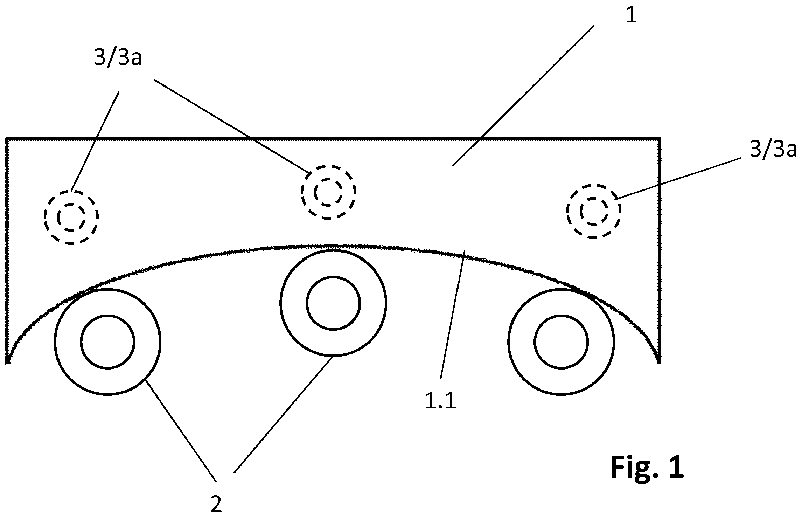

- Fig. 1: in schematischer Darstellung ein als Behälterführung ausgebildetes Formatteil;
- Fig. 2: in vereinfachter Darstellung und im Schnitt eine Formatteilschnellbefestigung gemäß der Erfindung, zusammen mit dem Formatteil und einem Maschinentisch;
- Fig. 3: in vereinfachter vergrößerter Darstellung die Formatteilschnellbefestigung der Fig. 2;
- Fig. 4: einen Federstecker, der Formatteilschnellbefestigung der Figuren 2 und 3;
- Fig. 5: eine Darstellung ähnlich Fig. 3 bei einer weiteren Ausführungsform der Erfindung.

In den Figuren ist 1 ein Formatteil, welches eine kreisbogenförmige Führung für Behälter 2 beispielsweise an einer Behältertransportstrecke oder an einem Behältereinlauf und/oder Behälterauslauf einer Behälterbehandlungsmaschine (z.B. Füll-, Verschließ- oder Etikettiermaschine) bildet. Das jeweilige Formatteil 1 ist mit mehreren Formatteilschnellbefestigungen 3 an der Behälterbehandlungsmaschine oder dessen Maschinengestell 4, beispielsweise an einem Tisch oder Vortisch austauschbar befestigt, so dass jedes an der Behälterbehandlungsmaschine oder Behältertransportstrecke vorhandenes Formatteil 1 bei einer Umstellung auf Behälter 2 eines anderen Typs, beispielsweise bei der Umstellung auf Behälter 2 mit einer anderen Größe oder einem anderen Behälterdurchmesser problemlos und ohne großen Zeitaufwand gegen ein passendes Formatteil 1 ausgetauscht werden kann. Hierbei ist es nicht nur erforderlich, dass das jeweilige Formatteil 1 mit den Formatteilschnellbefestigungen 3 zuverlässig und sicher am Maschinengestell 4 gehalten ist, sondern auch gewährleistet ist, dass das Formatteil 1 nach seiner erneuten Befestigung automatisch eine vorgegebene Orientierung und Position relativ zu anderen Funktionselementen, beispielsweise zu Transportsternen der Transportstrecke oder der Behälterbehandlungsmaschine aufweist. Insbesondere muss auch gewährleistet sein, dass das Formatteil 1 einen vorgegebenen Abstand von dem Maschinengestell 4 oder von seiner dortigen Befestigungsebene aufweist.

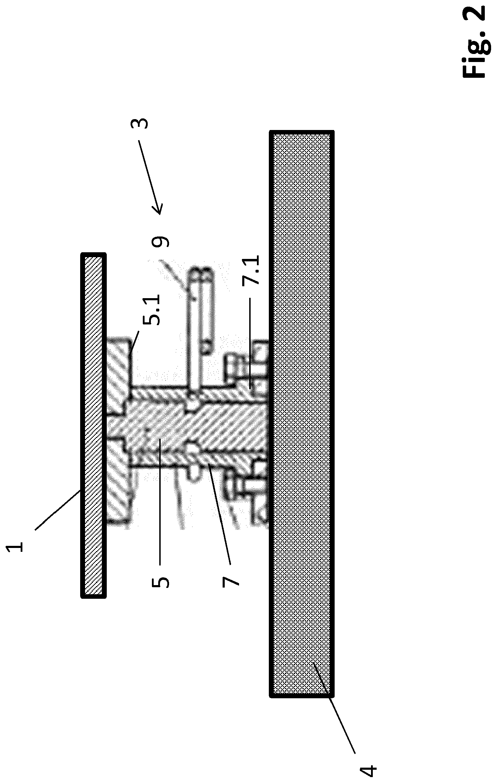

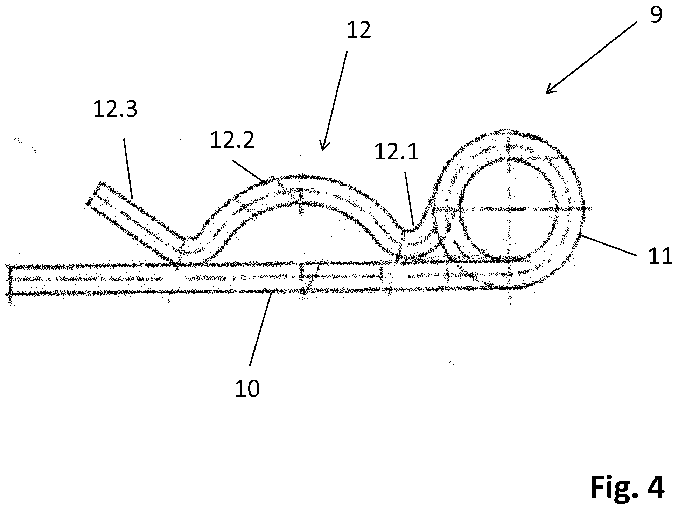

Bei der in den Fig. 2-4 dargestellten Ausführungsform besteht die Formatteilschnellbefestigung 3 im Wesentlichen aus einem Führungs- und Befestigungsbolzen 5, der mit einem Ende über ein Anschlussschlussstück 5.1 in Form einer Befestigungsplatte an dem Formatteil 1, beispielsweise an der Unterseite des Formatteils 1 befestigt ist. Der Befestigungsbolzen 5 und das Anschlussstück 5.1 bilden ein Verbindungselement 6. Die Formatteilschnellbefestigung 3 umfasst weiterhin eine Aufnahmebuchse 7 für den Befestigungsbolzen 5. Die Aufnahmebuchse 7 ist über ein Anschlussstück 7.1 in Form einer Befestigungsplatte am Maschinengestell befestigt. Die Aufnahmebuchse 7 und das Anschlussstück 7.1 bilden ein Verbindungselement 8. Der Befestigungsbolzen 5, das Anschlussstück 5.1, die Aufnahmehülse 7 und das Anschlussstück 7.1 sind aus einem metallischen Werkstoff, beispielsweise aus korrosionsfestem Stahl hergestellt.

Die Formatteilschnellbefestigung 3 umfasst weiterhin einen Federstecker 9, der die von Federsteckern übliche Formgebung aufweist und aus einer Länge eines Federdrahts durch Biegen hergestellt ist, und zwar mit einem gradlinigem schenkelartigen Abschnitt 10, der über einen wendelfederartigen Abschnitt 11 in einen Abschnitt 12 übergeht, der zumindest bei entspanntem Federstecker 9 dem Abschnitt 10 gegenüberliegt und so geformt ist, dass er an den Abschnitt 11 anschließend zunächst einen sich an den Abschnitt 10 annähernden Teilabschnitt 12.1, daran anschließend einen Teilabschnitt 12.2, der an der dem Abschnitt 10 zugewandten Seite bogenförmig und konkav gekrümmt ist, und daran anschließend einen Teilabschnitt 12.3 aufweist, der das Ende des Abschnittes 12 bildet, geradlinig oder im Wesentlichen geradlinig verläuft und bei entspanntem Federstecker 9 mit seiner Längserstreckung einen Winkel kleiner 90° mit der Längserstreckung des Abschnittes 10 einschließt, der sich zu den freien Enden der Abschnitte 10 und 12 öffnet.

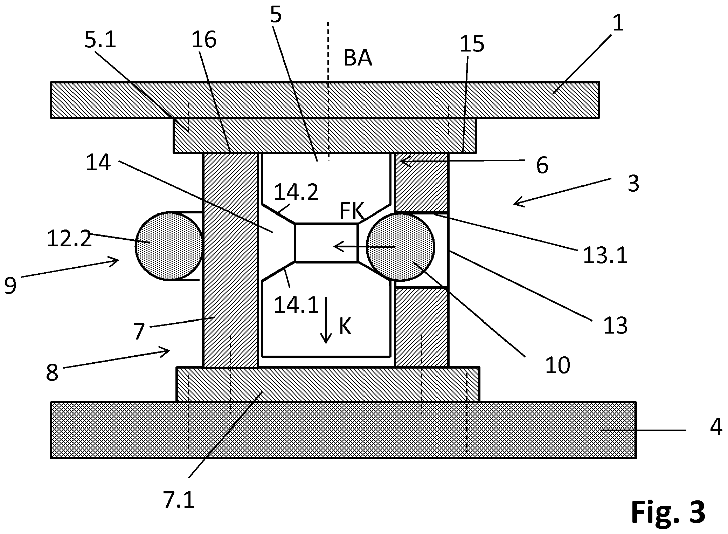

Mit dem Federstecker 12 wird der in die Aufnahmebuchse 7 eingeführte Befestigungsbolzen 5 nicht nur fixiert, sondern zugleich auch der erforderliche Abstand zwischen den Anschlussplatten 5.1 und 7.1 und damit der erforderliche Abstand zwischen dem Formatteil 1 und der Befestigungsebene am Maschinengestell 4 sichergestellt. Hierfür ist die Aufnahmehülse 7 mit einer durchgehenden schlitzförmigen Öffnung 13 versehen, die mit ihrer Längserstreckung in einer Ebene senkrecht zur Bolzenachse BA angeordnet ist und sich über einen Teil des Umfangs der Aufnahmehülse 7 erstreckt. Der Befestigungsbolzen 5 ist mit einer bolzenseitigen Ausnehmung in Form einer Umfangsnut 14 ausgebildet, deren seitliche Begrenzungsflächen, nämlich die in der Figur 3 untere Begrenzungsfläche 14.1 und die in der Fig. 3 obere Begrenzungsfläche 14.2 Schrägflächen, d.h. Kegelflächen sind und die so angeordnet sind, dass sich die Ausnehmung 13 und die Umfangsnut 14 bei ordnungsgemäß am Maschinengestell 4 positioniertem Formatteil 1 in etwa decken, wie dies in der Fig. 3 ebenfalls dargestellt ist.

Zum Verriegeln der Formatteilschnellbefestigung 3 wird der Federstecker 9 von der Seite her auf die Aufnahmehülse 7 derart aufgeschoben, dass der geradlinige Abschnitt 10 teilweise in der Ausnehmung 13 aufgenommen und teilweise aus dieser Ausnehmung in das Innere der Aufnahmehülse 7 vorsteht und dort gegen eine der schrägen Seitenflächen, d.h. bei der für die Fig. 3 gewählten Darstellung gegen die untere, dem freien Ende des Befestigungsbolzens 5 näher liegende Seitenfläche 14.1 anliegt, während der Abschnitt 12 mit seinem Teilabschnitt 12.2 die Aufnahmehülse 7 an der der Öffnung 13 gegenüberliegenden Seite auf einer Teillänge umschließt. Beide Abschnitte 10 und 12 sind dabei in einer Ebene senkrecht oder im Wesentlichen senkrecht zur Bolzenachse BA angeordnet. Da der Abschnitt 10 einerseits gegen die Seitenfläche 14.1 und andererseits auch gegen die dieser Seitenfläche entfernte und bei der Darstellung der Fig. 3 obere Begrenzungs- oder Seitenfläche 13.1 der Öffnung 13 anliegt und außerdem über den Abschnitt 11 des Federsteckers 9 mit der Federkraft FK bezogen auf die Bolzenachse BA radial nach innen vorgespannt ist, ergibt sich eine resultierende, auf den Befestigungsbolzen 5 wirkende Kraft K mit der Wirkung, dass das Verbindungselement 6 mit einer Anlagefläche gegen eine definierte Anlagefläche des Verbindungselementes 8 zur Anlage kommt, und zwar bei der dargestellten Ausführungsform die der Aufnahmehülse 7 zugewandte Seite des Anschlussstücks 5.1 gegen den oberen Rand der Aufnahmehülse 7, womit nach dem Herstellen der Verbindung das jeweilige Formatteil 1 nicht nur sicher am Maschinengestell 4 gehalten, sondern auch die erforderliche Positionierung aufweist.

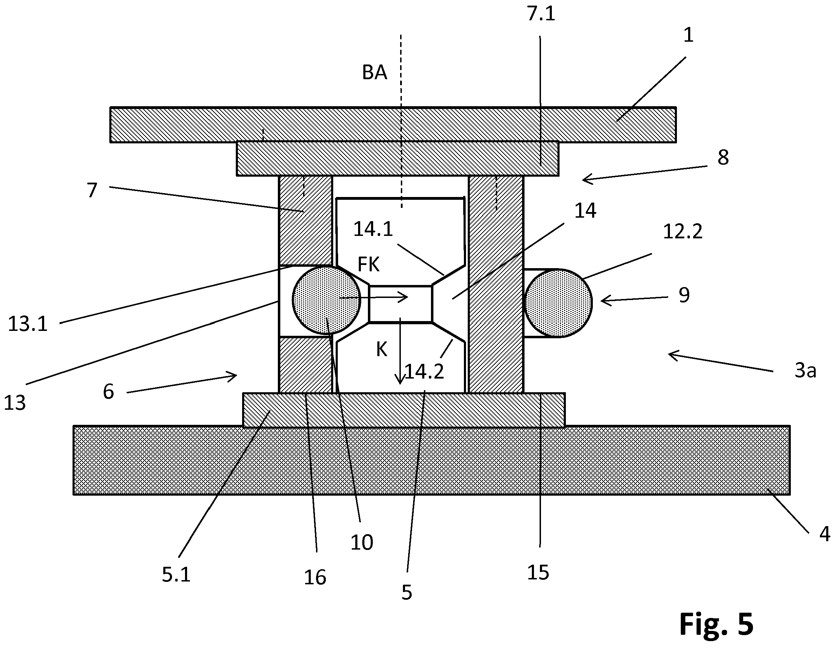

Die Fig. 5 zeigt als weitere Ausführungsform eine Formatteilschnellbefestigung 3a, die anstelle der Formatteilschnellbefestigung Verwendung finden kann und sich von der Formatteilschnellbefestigung im Wesentlichen nur dadurch unterscheidet, dass das von dem Befestigungsbolzen 5 und dem Anschlussstück 5.1 gebildete Verbindungselement 6 am Maschinengestell 4 und das von der Aufnahmebuchse 7 und dem Anschlussstück 7.1 gebildete Verbindungselement 8 am Formatteil 1 vorgesehen sind. Bei aneinander verriegelten Verbindungselementen 6 und 8 liegt der Federstecker 7 mit seinem teilweise in der Öffnung 13 aufgenommenen und in die Aufnahmehülse 7 hineinstehenden Abschnitt 10 wiederum einerseits gegen die dem freien Ende des Aufnahmebolzens näherliegende Seitenfläche 14.1 und andererseits gegen die dem freien Ende der Aufnahmehülse 7 näherliegende Seitenfläche 13.1 der Öffnung 13 an, so dass durch die Federkraft FK des Federsteckers 9 die beiden Verbindungselemente 6 und 8 mit ihren Anlageflächen gegeneinander angedrückt werden und dadurch auch die exakte Positionierung des Formatteils 1 relativ zu dem Maschinengestell 4 sichergestellt ist.

Vorstehend wurde davon ausgegangen, dass die Anlageflächen 15 und 16 von der den Befestigungsbolzen 5 umschließenden Ringfläche des Anschlussstücks 5.1 (Anlagefläche 15) und von dem oberen, dem Anschlussstück 7.1 entfernt liegenden ringförmigen Rand der Aufnahmehülse 7 (Anlagefläche 16) gebildet sind. Als Anlageflächen eignen sich grundsätzlich auch das freie, plane Ende des Befestigungsbolzens 5 und der Boden der Öffnung der Aufnahmehülse 7.

Die Ausbildung der Verbindungselemente 6 und 8 mit jeweils einem Anschlussstück 5.1 bzw. 7.1 hat zusätzlich zu einer vereinfachten Befestigung am Formatteil 1 und am Maschinengestell 4 auch den Vorteil, dass insbesondere auch die Anlagen 15 und 16 unmittelbar an den Verbindungselementen 6 und 8 gebildet sind, und somit mit ausreichend hoher Präzision unter Sicherstellung der geforderten Orientierung und Lage des jeweiligen Formatteils 1 am Maschinengestell 4 zuverlässig, insbesondere auch reproduzierbar realisiert werden können.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrundeliegende Erfindungsgedanke verlassen wird.

### Bezugszeichenliste

- 1: Formatteil
- 1.1: Führung
- 2: Behälter
- 3, 3a: Formatteilschnellbefestigung
- 4: Maschinengestell
- 5: Befestigungsbolzen
- 5.1: Anschlussstück
- 6: Verbindungselement
- 7: Aufnahmehülse
- 7.1: Anschlussstück
- 8: Verbindungselement
- 9: Federstecker
- 10 - 12: Abschnitte des Federsteckers
- 12.1 - 12.3: Teilabschnitte
- 13: Öffnung
- 13.1: Seitenfläche der Öffnung 13
- 14: Umfangsnut
- 14.1, 14.2: Seitenfläche der Umfangsnut 14
- 15, 16: Anlageflächen
- BA: Bolzen

## Patentansprüche

1. Formatteil, welches an einem Maschinengestell (4) einer Behälterbehandlungsmaschine oder einer Behältertransportvorrichtung unter Verwendung von Formatteilbefestigungen auswechselbar befestigt ist, **dadurch gekennzeichnet, dass** die am Formatteil vorgesehenen Formatteilbefestigungen als Formatteilschnellbefestigungen (3) besteht aus a) einem ersten, wenigstens einen Befestigungsbolzen (5) aufweisenden Verbindungselement (6), wobei der Befestigungsbolzen (5) eine Schrägfläche (14.1) aufweist, die mit der Bolzenachse einen Winkel kleiner als 90° einschließt,
oder b)
aus einem, wenigstens eine Aufnahme oder Aufnahmehülse (7) für einen Befestigungsbolzen (5) aufweisenden Verbindungselement (8) wobei die Aufnahme oder Aufnahmehülse (7) eine umfangsseitige Öffnung (13) aufweist und wobei der Außendurchmesser der Aufnahme oder Aufnahmehülse(7) an einen konvexen Teilabschnitt (12.2) eines Federsteckers angepasst ist.

2. Formatteil nach Anspruch 1, **dadurch gekennzeichnet, dass** die Schrägfläche (14.1) mit einer Bolzenachse (BA) einen Winkel kleiner als 90° einschließt, der sich zu einem freien Ende des Befestigungsbolzens (5) hin öffnet.

3. Formatteil nach einem der vorhergehenden Ansprüche, **dadurch gekennzeichnet, dass** die Schrägfläche (14.1) von einer bolzenseitigen Ausnehmung, vorzugsweise in Form einer Umfangsnut (14) gebildet ist.

4. Formatteil nach einem der vorhergehenden Ansprüche, **dadurch gekennzeichnet, dass** die Anlage (15) an dem ersten Verbindungselement (6) von einer die Bolzenachse (BA) und/oder den Befestigungsbolzen (5) umschließenden Fläche und die Anlage (16) an dem zweiten Verbindungselement (16) von einer Fläche der Aufnahmehülse (7) gebildet sind.

5. Formatteil nach einem der vorhergehenden Ansprüche, **dadurch gekennzeichnet, dass** wenigstens ein Verbindungselement (6, 8) der jeweiligen Formatteilschnellbefestigung (3, 3a) ein Anschlussstück, beispielsweise ein plattenförmiges Anschlussstück (5.1, 7.1) aufweist, welches am Formatteil (1) befestigt ist.

6. Formatteilbefestigung zur austauschbaren Befestigung von Formatteilen (1) an einem Maschinengestell (4) einer Behälterbehandlungsmaschine oder einer Behältertransportvorrichtung, wobei die Formatteilbefestigung als Formatteilschnellbefestigung (3) aus einem ersten, wenigstens einen Befestigungsbolzen (5) aufweisenden Verbindungselement (6) und einem zweiten, wenigstens eine Aufnahme oder Aufnahmehülse (7) für einen Befestigungsbolzen (5) aufweisenden Verbindungselement (8) besteht, **dadurch gekennzeichnet, dass** die Formatteilschnellbefestigung zusätzlich aus wenigstens einem Federstecker (9) besteht, der mit einem ersten Federsteckerabschnitt (12) die Aufnahme oder Aufnahmehülse (7) auf einem Teil ihres Umfangs umschließt und sich mit einem zweiten Federsteckerabschnitt (10) durch eine umfangsseitige Öffnung (13) der Aufnahme oder Aufnahmehülse (7) hindurch gegen eine Schrägfläche (14.1) am Befestigungsbolzen (5) abstützt, die mit einer Bolzenachse (BA) einen Winkel kleiner als 90° einschließt, wobei die Schrägfläche (14.1) einen solchen Verlauf aufweist, dass eine bezogen auf die Bolzenachse (BA) radial nach innen gerichtete Federkraft (FK) des zweiten Federsteckerabschnitts (10) eine Kraft (K) auf den Befestigungsbolzen (5) in der Weise ausübt, dass die Verbindungselemente (6, 8) mit Anlagen (15, 16) gegeneinander anliegen.

7. Formatteilbefestigung nach Anspruch 6, **dadurch gekennzeichnet, dass** die Schrägfläche (14.1) mit einer Bolzenachse (BA) einen Winkel kleiner als 90° einschließt, der sich zu einem freien Ende des Befestigungsbolzens (5) hin öffnet.

8. Formatteilbefestigung nach einem der Ansprüche 6 oder 7, **dadurch gekennzeichnet, dass** die Schrägfläche (14.1) von einer bolzenseitigen Ausnehmung, vorzugsweise in Form einer Umfangsnut (14) gebildet ist.

9. Formatteilbefestigung nach einem der Ansprüche 6 - 8, **dadurch gekennzeichnet, dass** die Anlage (15) an dem ersten Verbindungselement (6) von einer die Bolzenachse (BA) und/oder den Befestigungsbolzen (5) umschließenden Fläche und die Anlage (16) an dem zweiten Verbindungselement (16) von einer Fläche der Aufnahmehülse (7) gebildet sind.

10. Formatteilbefestigung nach einem der Ansprüche 6 - 9, **dadurch gekennzeichnet, dass** wenigstens ein Verbindungselement (6, 8) der jeweiligen Formatteilschnellbefestigung (3, 3a) ein Anschlussstück, beispielsweise ein plattenförmiges Anschlussstück (5.1, 7.1) für eine Befestigung am Formatteil (1) oder am Maschinengestell (4) aufweist.

## Claims

1. Format part which is exchangeably attached to a machine frame (4) of a container treatment machine or of a container transport device using format part fasteners, **characterised in that**, as quick-action format part fasteners (3), the format part fasteners provided on the format part comprising of a) a first connecting element (6) having at least one fastening stud (5), the fastening stud (5) comprising an angled face (14.1) which with the stud axis encloses an angle of less than 90°,
or b)
a connecting element (8) having at least one receptacle or locating sleeve (7) for a fastening stud (5), with the receptacle or locating sleeve (7) comprising a peripheral opening (13) and the outside diameter of the receptacle or locating sleeve (7) being matched to a convex partial section (12.2) of a spring cotter.

2. The format part of claim 1 **characterised in that** the angled face (14.1) encloses an angle of less than 90° with a stud centreline (BA), with said angle opening out towards a free end of the fastening stud (5).

3. The format part of any one of the preceding claims wherein the angled face (14.1) is formed by a recess in the stud, preferably in the form of a circumferential groove (14).

4. The format part of any one of the preceding claims wherein the contact face (15) on the first connecting element (6) is formed by a face surrounding the stud centreline (BA) and/or the fastening stud (5), and the contact face (16) on the second connecting element (16) is formed by a face of the locating sleeve (7).

5. The format part of any one of the preceding claims **characterised in that** at least one connecting element (6, 8) of the respective quick-action format part fastener (3, 3a) comprises a connecting piece, for example a plate-shaped connecting piece (5.1, 7.1), which is attached to the format part (1).

6. Format part fastener for the exchangeable fastening of format parts (1) to a machine frame (4) of a container treatment machine or of a container transport device, with the format part fastener - as a quick-action format part fastener (3) - consisting of a first connecting element (6) comprising at least one fastening stud (5) and of a second connecting element (8) comprising at least one receptacle or locating sleeve (7) for a fastening stud (5), **characterised in that** the quick-action format part fastener also consists of at least one spring cotter (9) which with a first spring cotter section (12) surrounds part of the circumference of the receptacle or locating sleeve (7) and with a second spring cotter section (10) is supported through a peripheral opening (13) of the receptacle or locating sleeve (7) against an angled face (14.1) on the fastening stud (5) which encloses an angle of less than 90° with a stud centreline (BA), with the angled face (14.1) presenting a profile such that a spring force (FK) of the second spring cotter section (10) directed radially inwards relative to the stud centreline (BA) exerts such a force (K) on the mounting stud (5) that the connecting elements (6, 8) lie against one another with contact faces (15, 16).

7. The format part fastener of claim 6 **characterised in that** the angled face (14.1) encloses an angle of less than 90° with a stud centreline (BA), with said angle opening out towards a free end of the fastening stud (5).

8. The format part fastener of either of claims 6 or 7 wherein the angled face (14.1) is formed by a recess in the stud, preferably in the form of a circumferential groove (14).

9. The format part fastener of any one claims 6 - 8 wherein the contact face (15) on the first connecting element (6) is formed by a face surrounding the stud centreline (BA) and/or the fastening stud (5), and the contact face (16) on the second connecting element (16) is formed by a face of the locating sleeve (7).

10. The format part fastener of any one of claims 6 - 9 wherein at least one connecting element (6, 8) of the respective quick-action format part fastener (3, 3a) comprises a connecting piece, for example a plate-shaped connecting piece (5.1, 7.1), for fastening to the format part (1) or machine frame (4).

## Revendications

1. Pièce de format qui est fixée de manière interchangeable à un bâti de machine (4) d'une machine de manutention de récipients ou d'un dispositif de transport de récipients en utilisant des fixations pour pièces de format, **caractérisée en ce que** les fixations pour pièces de format prévues au niveau de la pièce de format en tant que fixations rapides pour pièces de format (3) sont constituées
a) d'un premier élément de liaison (6) présentant au moins un boulon de fixation (5), dans laquelle le boulon de fixation (5) présente une surface inclinée (14.1) qui inclut un angle inférieur à 90° avec l'axe de boulon,
ou b)
d'un élément de liaison (8) présentant au moins un logement ou un manchon de logement (7) pour un boulon de fixation (5), dans laquelle le logement ou le manchon de logement (7) présente une ouverture circonférentielle (13) et dans laquelle le diamètre extérieur du logement ou du manchon de logement (7) est adapté à une portion de section (12.2) convexe d'une goupille à ressort.

2. Pièce de format selon la revendication 1, **caractérisée en ce que** la surface inclinée (14.1) comprend un angle inférieur à 90° avec un axe de boulon (BA), qui s'ouvre vers une extrémité libre du boulon de fixation (5).

3. Pièce de format selon l'une quelconque des revendications précédentes, **caractérisée en ce que** la surface inclinée (14.1) est formée par un évidement côté boulon, de préférence sous la forme d'une rainure circonférentielle (14).

4. Pièce de format selon l'une quelconque des revendications précédentes, **caractérisée en ce que** l'installation (15) au niveau du premier élément de liaison (6) est formée par une surface entourant l'axe de boulon (BA) et/ou le boulon de fixation (5) et l'installation (16) au niveau du second élément de liaison (16) est formée par une surface du manchon de logement (7).

5. Pièce de format selon l'une quelconque des revendications précédentes, **caractérisée en ce qu'**au moins un élément de liaison (6, 8) de la fixation rapide pour pièces de format (3, 3a) respective présente une pièce de raccordement, par exemple une pièce de raccordement en forme de plaque (5.1, 7.1), laquelle est fixée à la pièce de format (1).

6. Fixation pour pièces de format pour la fixation interchangeable de pièces de format (1) à un bâti de machine (4) d'une machine de manutention de récipients ou d'un dispositif de transport de récipients, dans laquelle la fixation pour pièces de format en tant que fixation rapide pour pièces de format (3) est constituée d'un premier élément de liaison (6) présentant au moins un boulon de fixation (5) et d'un second élément de liaison (8) présentant au moins un logement ou un manchon de logement (7) pour un boulon de fixation (5), **caractérisée en ce que** la fixation rapide pour pièces de format est en outre constituée d'au moins une goupille à ressort (9) qui entoure avec une première section de goupille à ressort (12) le logement ou le manchon de logement (7) sur une partie de sa circonférence et s'appuie avec une seconde section de goupille à ressort (10) à travers une ouverture circonférentielle (13) du logement ou du manchon de logement (7) contre une surface inclinée (14.1) au niveau du boulon de fixation (5), laquelle comprend un angle inférieur à 90° avec un axe de boulon (BA), dans laquelle la surface inclinée (14.1) présente un tracé tel qu'une force de ressort (FK) de la seconde section de goupille à ressort (10) dirigée radialement vers l'intérieur par rapport à l'axe de boulon (BA) exerce une force (K) sur le boulon de fixation (5) de sorte que les éléments de liaison (6, 8) avec les installations (15, 16) soient en appui l'un contre l'autre.

7. Fixation pour pièces de format selon la revendication 6, **caractérisée en ce que** la surface inclinée (14.1) comprend un angle inférieur à 90° avec un axe de boulon (BA), qui s'ouvre vers une extrémité libre du boulon de fixation (5).

8. Fixation pour pièces de format selon l'une quelconque des revendications 6 ou 7, **caractérisée en ce que** la surface inclinée (14.1) est formée par un évidement côté boulon, de préférence sous la forme d'une rainure circonférentielle (14).

9. Fixation pour pièces de format selon l'une quelconque des revendications 6 à 8, **caractérisée en ce que** l'installation (15) au niveau du premier élément de liaison (6) est formée par une surface entourant l'axe de boulon (BA) et/ou le boulon de fixation (5) et l'installation (16) au niveau du second élément de liaison (16) est formée par une surface du manchon de logement (7).

10. Fixation pour pièces de format selon l'une quelconque des revendications 6 à 9, **caractérisée en ce qu'**au moins un élément de liaison (6, 8) de la fixation rapide pour pièces de format (3, 3a) respective présente une pièce de raccordement, par exemple une pièce de raccordement en forme de plaque (5.1, 7.1) pour une fixation à la pièce de format (1) ou au bâti de machine (4).
